# EUROPEAN PATENT SPECIFICATION

(11) **EP 1 976 742 B1**
(45) Date of publication and mention of the grant of the patent: **09.12.2009**
(21) Application number: 07713420.3
(22) Date of filing: 26.01.2007
(51) Int. Cl.: B62D 1/04, B62D 1/06

(54) **VEHICLE STEERING-WHEEL COVER**
ABDECKUNG FÜR FAHRZEUGLENKRAD
COUVRE-VOLANT DE VEHICULE

(43) Date of publication of application: 08.10.2008
(73) Proprietor: Bomisa S.P.A., 20094 Assago (IT)
(72) Inventor: CORINALDI, Alessandro Alcide Gino Benvenuto, I-20100 Milano (IT); VOLONTIERI, Antonio, I-20025 Legnano (IT); SORZE, Marco, I-20089 Rozzano (IT)
(74) Representative: Perani, Aurelio
(86) International application number: PCT/IT2007/000054
(87) International publication number: WO 2008/090576

(56) References cited:
- EP-A- 1 403 167
- EP-A1- 1 069 023
- DE-A1- 10 113 493
- DE-A1- 10 352 733

## Description

The present invention relates to a vehicle steering-wheel cover, particularly, but without limitation, to a cover for an airbag device of a vehicle steering-wheel, according to the preamble of claim 1, and as known from DE 101 13 493A.

Airbag devices are widely used in the automotive industry, as passive safety systems that can be installed in steering-wheels, dashboards, seats and/or roof panels of automotive vehicles.

In its most common application, the airbag is a fabric bag, e.g. made of Kevlar, which is located in a housing in the central part of the steering-wheel.

In the event of a violent crash of the vehicle, the central part of the front wall of this housing is designed to violently break open upon airbag triggering, to prevent the driver from striking the steering column.

While such airbag device provides unquestionable advantages for the passive safety of drivers, it still prevents visually convenient installation of devices designed to warn the driver about the vehicle operating status.

Automotive warning devices are usually located in the instrument panel, dashboard and/or central dashboard column.

Nevertheless, it is a fact that the driver has to look away from the road to read the indications on such warning devices, and focus attention on the device to read the proposed information.

This action can cause the driver to be distracted as he/she drives, and lead to crashes, with easily imaginable consequences.

Particularly, the presence of an airbag device prevents the central part of the steering-wheel, i.e. the part that is designed to violently break open as the airbag is triggered, from being used to hold the above mentioned devices for warning about the vehicle operating status.

Thus, a need is strongly felt in the automotive industry to utilize the central part of the front wall of the airbag housing.

The invention is based on the issue of conceiving a steering-wheel cover, and more particularly a cover for an airbag device of a vehicle steering-wheel, that has such structural and functional features as to fulfill the above need.

This issue is addressed by a vehicle steering-wheel cover as defined in claim 1.

The present invention provides a steering-wheel cover, more particularly a cover for an airbag device, that can promptly warn the driver about the vehicle operating status.

Further features and advantages of the vehicle steering-wheel cover of this invention will be apparent upon reading the following description of one preferred embodiment thereof, which is given by way of illustration and without limitation with reference to the accompanying figures, in which:
- Figure 1 is a sectional exploded view of a steering-wheel cover, more particularly of a cover for an airbag device of a vehicle steering-wheel, according to the present invention;
- Figure 2 is a sectional view of the cover of Figure 1, with the elements held in the vehicle steering-wheel cover, more particularly in the cover for an airbag device of a vehicle steering-wheel, according to the present invention;
- Figure 3 is a sectional view of an alternative embodiment of the cover of Figure 1, with the elements held in the vehicle steering-wheel cover, more particularly in the cover for an airbag device of a vehicle steering-wheel, according to the present invention;
- Figure 4 is a sectional view of another embodiment of the cover of Figure 1, with the elements held in the vehicle steering-wheel cover, more particularly cover for an airbag device of a vehicle steering-wheel, according to the present invention;
- Figure 5 shows a basic wiring diagram for the control of one of the elements that form the vehicle steering-wheel cover, more particularly the cover for an airbag device of a vehicle steering-wheel, according to the present invention;

Referring to the annexed figures, numeral 1 generally designates a cover for a vehicle steering-wheel (not shown), more particularly a cover for an airbag device, which is usually held in a vehicle steering-wheel.

In accordance with the present invention, the cover 1 comprises:
- a body 2,
- a support element 3 having a predetermined profile, e.g. a circular, rhomboidal egg-, shield-shaped profile and/or the like,
- at least one light source 4,
- diffuser means 5 for diffusing light emitted from the light source 4,
- electronic control means 6 for controlling the light source 4, and
- a plate 7.

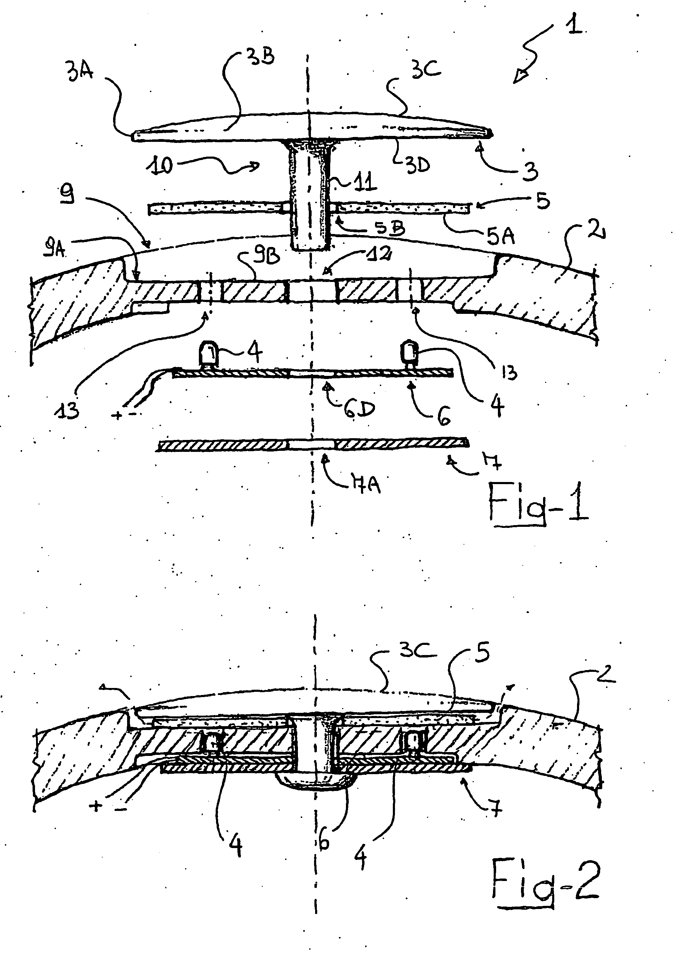

Particularly referring to Figures 2 to 4, which shows the above elements held in the vehicle steering-wheel cover, it can be appreciated that the support element 3 is associated to the body 2 and that the diffuser means 5 and the electronic control means 6 are interposed between said body 2 and said support element 3.

Advantageously, the electronic control means 6 can control the light source 4 to obtain a visual effect in response to specific data "D" concerning the status of a vehicle 8, to promptly warn the driver about the operating status of the vehicle.

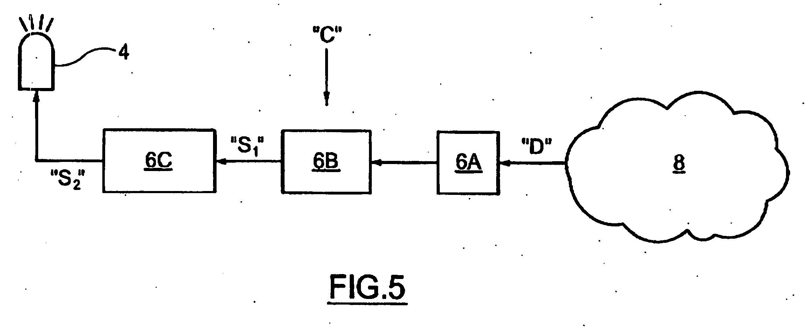

For this purpose, with further reference to Figure 5, which shows a possible wiring diagram, the electronic control means 6 comprise a data acquisition interface 6A, a microprocessor 68 and a control device 6C, wherein said data acquisition interface 6A can receive data "D" concerning the status of the vehicle 8, said microprocessor 6B can process said data "D" to generate a processed signal "S₁" according to predetermined control criteria "Cᵢ" and said control device 6C can receive said processed signal "S₁" to generate a control signal "S₂" for controlling said light source 4 according to said control criteria "Cᵢ".

It shall be noted that such Figure 5 only shows the elements required to understand the operation and implementation of the present invention. Those skilled in the art will understand which additional elements are required, and how they have to be designed, implemented and connected with the illustrated elements to form a complete wiring diagram of the electronic control means 6.

For instance, a person of ordinary skill in the art will be able to supply the electronic control means 6 with appropriate voltages and currents.

Advantageously, the control signal "S₂" is an electric signal appropriately modulated to control said light source 4 to obtain a visual effect in response to said data "D" concerning the status of the vehicle 8.

In one embodiment of the present invention, the data acquisition interface 6A is envisaged as a digital data acquisition interface, that can interface with the data channel (not shown) for the data "D" of the vehicle 8, for acquiring said data "D" concerning the vehicle status.

In this case, the data "D" is digital data and interfacing with the data transmission channel requires knowledge of the transmission protocol used by the manufacturer of the vehicle 8.

Alternatively, the data acquisition interface 6A is an analogue data acquisition interface, that can directly acquire the value of predetermined electric quantities, such as voltage and/or current, at specific points of the electric circuit of the vehicle, such as the ignition switch, courtesy lights and/or the like, said electric quantities being representative of said data "D" concerning the status of the vehicle 8.

In another embodiment (not shown), the data acquisition interface 6A is a radio-based data acquisition interface that can remotely acquire said data "D" concerning the status of the vehicle 8.

For this purpose, suitable transponders may be used for remote acquisition of the data "D". This solution is particularly suitable for use when assembly of dedicated cables is difficult.

For example, if the data "D" include instantaneous speed, average speed, instantaneous fuel consumption, average fuel consumption, abnormal condition warning and/or the like and the control criterion C provides the generation of a "fade-in" visual effect, then the microprocessor 6B shall process the data "D" in such a manner as to generate a specific processed signal "S₁" so that the control device 6C can in turn generate a suitable control signal "S₂" which is an electric signal modulated to fade the light source 4 from off to on with a preset speed.

In other words, the control signal "S₂" is an electric signal modulated to gradually increase the intensity of the light source 4 with appropriate frequency.

Still considering that the data "D" include the data listed above, if the control criterion C provides the generation of a "fade-out" visual effect, then the control signal "S₂" will be an electric signal modulated to fade the light source 4 from on to off with a preset speed, to gradually decrease its intensity.

It shall be noted that in the above "C" control cases, the microprocessor 6B can control the light source 4 to vary among a plurality of colors, for instance in sixteen-million-color palette.

However, if the control criterion "C" provides the generation of a blinking visual effect, then the control signal "S₂" will be an electric signal modulated to cause the light source 4 to blink with a preset frequency, such as 0.5 sec.

For example, in the latter control condition "C", the light source 4 may blink between two states, off-color or color-color, with the color possibly varying among a plurality of colors.

Those skilled in the art may obviously envisage other types of functionally equivalent control criteria "C" instead of the above control criteria "C". For example, other control criteria "C" may include:
- adjusting the intensity of the light source 4 among a plurality of intensity levels, e.g. among 256 values;
- providing a psychedelic effect of the light source 4, in which the light source 4 blinks and changes color to the rhythm of music transmitted from the vehicle radio.

Referring now to Figure 1, the body 2 comprises a receptacle 9, with a bottom 9A, which is conformed to receive the support element 3 and the diffuser means 5.

It can be appreciated, particularly from Figures 2, 3 and 4, that the support element 3 and the diffuser means 5 are packed together to safely prevent them from coming out of the body 2.

It should be noted that the support element 3 has a front wall 3A, i.e. the wall exposed to the driver's view, with a receptacle 3B in which an emblem 3C is firmly associated and a rear wall 3D, i.e. the wall hidden from the driver's view, with engagement means 10 for connecting said support element to said body 2.

Particularly, as shown in such Figures 2 to 4, the diffuser means 5 may be packed against the rear wall 3B, e.g. using a glue, and are in surface contact with the bottom 9A of the receptacle 9.

Those skilled in the art may obviously envisage other types of functionally equivalent materials instead of the glue.

Particularly, the engagement means 10 include a stem 11 projecting from said rear wall 3D of said support element 3 and the plate 7 in which a hole 7A is made.

As shown in Figure 1, the bottom 9A of the receptacle 9 has a front wall 9B and a rear wall 9C and a first aperture 12 extending from said front wall 9B and said rear wall 9C of the bottom 9A of the receptacle 9 of said body 2.

It shall be particularly noted that the stem 11 extends through said aperture 12 of said body 2 and through said hole 7A of said plate 7, as well as through a hole 5B formed in the diffuser means 5 and, optionally, through a hole formed in the electronic control means 6.

In other words, the holes 5A, 6A and 7A and the first aperture 12 are formed in their respective elements in aligned positions.

To prevent removal of the support element 3 and the diffuser means 5, the stem 11 has an end portion 11A riveted over the plate 7.

In a preferred embodiment of the present invention, in the proximity of the front wall 9B of the bottom 9A of the receptacle 9, the bottom 9A has a second aperture 13 for receiving the light source 4 so that the light emitted by said at least one light source 4 may come out through said second aperture 13.

As shown in Figures 2, 3 and 4, the light source 4 is wholly contained within the thickness of the receptacle 9.

It shall be further noted that the body 2 has a housing 14 in which the electronic control means 6 are located, within the thickness of said body 2, at the rear wall 9C of the bottom 9A of the receptacle 9.

As shown in the embodiment of such Figure 2, the profile of the diffuser means 5 is contained in the profile of the support element 3.

It shall be noted that the electronic control means 6 consist of a flexible Printed Circuit Board (PCB) whose thickness allows it to be located in the housing 14, e.g. is less than 0.5 mm, preferably 0.2 mm.

Alternatively, the engagement means 10 include a plurality of crimping means (not shown) which, according to a preferred embodiment, are peripheral tabs projecting out of the rear wall 3D of the support element 3.

Particularly, the plurality of peripheral tabs may extend through the diffuser means 5 and are folded back against the real wall 5A of the diffuser means 5 during assembly.

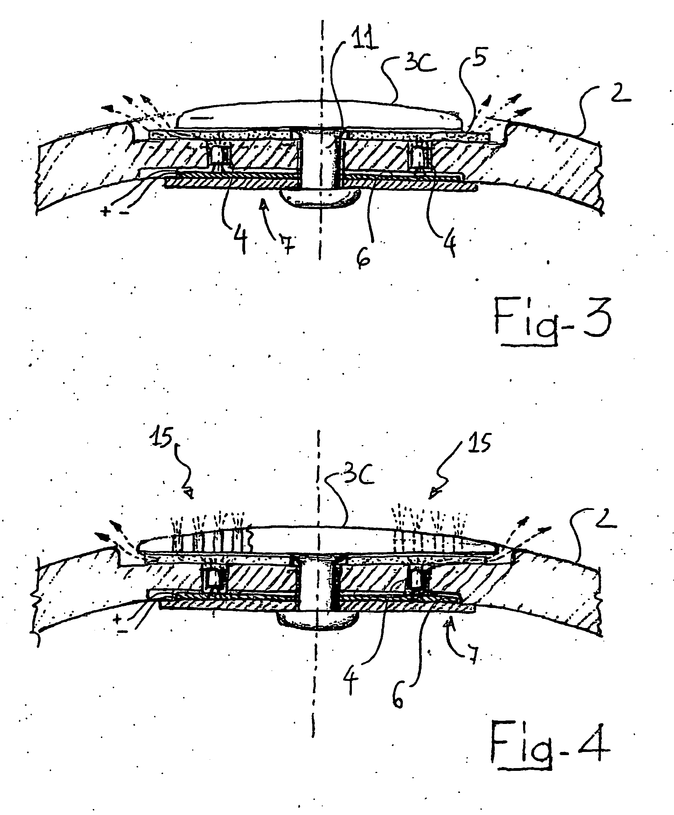

Referring now to Figure 3, which shows a different embodiment of the present invention, the profile of the diffuser means 5 extends beyond the profile of the support element 3.

Thus, the peripheral profile of the diffuser means 5 projects out of the peripheral profile of the support element 3.

For example, in the embodiment of this figure, if the profile of the support element 3 is substantially circular, then the diffuser means 5 will also have a substantially circular (or disk) profile, and the part of the peripheral profile of the diffuser means 5 beyond the peripheral profile of the support element 3 forms a ring (or toroid) surrounding the support element 3.

Referring now to Figure 4, which shows a further different embodiment of the present invention, at least one portion of the support element 3 and the corresponding portion of the emblem 3C have a plurality of microholes 15 for transmitting the light emitted from the light source 4 also through said support element and said emblem.

It should be noted that the support element 3 and the emblem 3C are formed of sheet metal, such as aluminum.

It should be further noted that the diffuser means 5 include a monolithic element which is made of a material selected from the group consisting of transparent polycarbonate and opaline.

For example, the monolithic element may have a thickness in a range from 0.3 to 10 mm, preferably from 0.5 to 1.5 mm.

The monolithic element may be processed to obtain polished and/or satin-finished surfaces, e.g. at the outer surface or at the surface of the hole 5B, which are designed to selectively enhance or reduce light transmission through the plastic element.

In this respect, it shall be noted that a film diffuser may be also applied to said monolithic plastic element, to obtain a composite plastic element that can provide selective light transmission through the plastic element.

In a preferred embodiment, the light source 4 may be a LED, or a group of LEDs, of single-color and/or RGB, i.e. multicolor type.

The group of LEDs comprises multiple LED sources, such as a number of 2 to 16 LEDs.

In the embodiments described above and shown in Figures 2 to 4, the elements have been disposed in the receptacle 9 of the body 2 in such an arrangement that the surface of the emblem 3C, i.e. the surface exposed to the driver's view, seamlessly continued the surface of the body 2 over said receptacle 9. As an alternative, the diffuser means 5 and the support element 3 with the emblem 3C attached thereto may extend below or above the imaginary line that continues the surface of the body 2 over said receptacle 9.

As clearly shown in the above description, the vehicle steering-wheel cover, more particularly the cover for an airbag device of a vehicle steering-wheel according to the present invention fulfills the above mentioned need and also obviates prior art drawbacks as set out in the introduction of this disclosure.

Those skilled in the art will obviously appreciate that a number of changes and variants may be made to the vehicle steering-wheel cover as described hereinbefore, in response to specific requirements, without departure from the scope of the invention, as defined in the following claims.

## Claims

1. Vehicle steering-wheel cover (1) comprising a body (2) and a support element (3) having a predetermined profile, said support element (3) being associated to said body (2), **characterized in that** diffuser means (5) for diffusing a light emitted from at least one light source (4), as well as electronic control means (6) for controlling said light source (4) to obtain a visual effect in response to data (D) concerning the status of the vehicle (8) are interposed between said body (2) and said support element (3).

2. A vehicle steering-wheel cover as claimed in claim 1, wherein said electronic control means (6) comprise a data acquisition interface (6A), a microprocessor (6B) and a control device (6C), said data acquisition interface (6A) being adapted to receive said data (D) concerning the status of the vehicle (8), said microprocessor (6B) being adapted to process said data (D) to generate a processed signal (S₁) according to predetermined control criteria (C) and said control device (6C) being adapted to receive said processed signal (S₁) to generate a control signal (S₂) for controlling said light source (4) according to said control criteria (C).

3. A vehicle steering-wheel cover as claimed in claim 2, wherein said control signal (S₂) is an electric signal appropriately modulated to control said light source (4) to obtain a visual effect in response to said data (D) concerning the status of the vehicle (8).

4. A vehicle steering-wheel cover as claimed in claim 2 or 3, wherein said control signal (S₂) is an electric signal modulated to fade said light source (4) from off to on with a preset speed, thereby providing a fade-in visual effect.

5. A vehicle steering-wheel cover as claimed in claim 2 or 3, wherein said control signal (S₂) is an electric signal modulated to fade said light source (4) from on to off with a preset speed, thereby providing a fade-out visual effect.

6. A vehicle steering-wheel cover as claimed in claim 2 or 3, wherein said control signal (S₂) is an electric signal modulated to cause said light source (4) to blink with a preset frequency, thereby providing a blinking visual effect

7. A vehicle steering-wheel cover as claimed in claims 2 to 6, wherein said data acquisition interface (6A) is a digital data acquisition interface, that can interface with the data channel of the vehicle, for acquiring said data (D) concerning the status of the vehicle (8).

8. A vehicle steering-wheel cover as claimed in claims 2 to 6, wherein said data acquisition interface (6A) is an analogue data acquisition interface, that can directly acquire the value of predetermined electric quantities at specific points of the electric circuit of the vehicle, said electric quantities being representative of said data (D) concerning the status of the vehicle (8).

9. A vehicle steering-wheel cover as claimed in claims 2 to 6, wherein said data acquisition interface (6A) is a radio-based data acquisition interface for remotely acquiring said data (D) concerning the status of the vehicle (8).

10. A vehicle steering-wheel cover as claimed in claim 1 to 9, wherein said data (D) concerning the status of the vehicle include instantaneous speed, average speed, instantaneous fuel consumption, average fuel consumption and/or abnormal condition warning.

11. A vehicle steering-wheel cover as claimed in claims 1 to 10, wherein said body (2) comprises a receptacle (9), with a bottom (9A), which is conformed to receive said support element (3) and said diffuser means (5) in a packed configuration.

12. A vehicle steering-wheel cover as claimed in claim 11, wherein said support element (3) has a front wall (3A), with a receptacle (3B) in which an emblem (3C) is firmly associated and a rear wall (3D), with engagement means (10) for connecting said support element (3) to said body (2).

13. A vehicle steering-wheel cover as claimed in claim 12, wherein said engagement means (10) comprise a stem (11), projecting from said rear wall (3D) of said support element (3) and a plate (7) in which a hole (7A) is made.

14. A vehicle steering-wheel cover as claimed in claims 11 to 13, wherein said bottom (9A) of said receptacle (9) has a front wall (9B) and a rear wall (9C) and a first aperture (12) extending from said front wall (9B) and said rear wall (9C), said stem (11) extending through said first aperture (12) of said body (2) and through said hole (7A) of said plate (7), said stem (11) having an end portion (11A) riveted over said plate (7) to prevent removal of said support element (3).

15. A vehicle steering-wheel cover as claimed in claims 11 to 14, wherein, in the proximity of said front wall (9B) of the bottom (9A) of said receptacle (9), said bottom (9A) has a second aperture (13) for receiving said light source (4) so that the light emitted by said at least one light source (4) and intercepted by said diffuser means (5) comes out through said second aperture (13).

16. A vehicle steering-wheel cover as claimed in claims 11 to 15, wherein said body (2) has a housing (14) in which said electronic control means (6) are located, at said rear wall (9C) of the bottom (9A) of said receptacle (9).

17. A vehicle steering-wheel cover as claimed in claims 1 to 16, wherein said diffuser means (5) extend beyond said profile of said support element (3).

18. A vehicle steering-wheel cover as claimed in claim 12, wherein said engagement means (10) comprise a plurality of crimping means, projecting out of said rear wall (3D) of said support element (3).

19. A vehicle steering-wheel cover as claimed in claim 18, wherein said plurality of crimping means, extend through said diffuser means (5).

20. A vehicle steering-wheel cover as claimed in any preceding claim wherein, if said profile of said support element (3) is substantially circular, then said diffuser means (5) will also have a substantially circular profile.

21. A vehicle steering-wheel cover as claimed in claim 12, wherein at least one portion of said support element (3) and the corresponding portion of said emblem (3C) have a plurality of microholes (15) for transmitting the light emitted from said light source (4) also through said support element (3) and said emblem (3C)

22. A vehicle steering-wheel cover as claimed in any preceding claim, wherein said light source includes a LED, or a group of LEDs, of single-color and/or RGB type.

23. A vehicle steering-wheel cover as claimed in any preceding claim, wherein said support element (3) is made of sheet metal.

24. A vehicle steering-wheel cover as claimed in any preceding claim, wherein said diffuser means (5) include a monolithic element which is made of a material selected from the group consisting of transparent polycarbonate and opaline, said monolithic element having a thickness in a range from 0.3 to 10 mm, preferably from 0.5 to 1.5 mm.

25. A vehicle steering-wheel cover as claimed in claim 24, wherein a film diffuser is applied to said monolithic element.

26. A vehicle steering-wheel comprising a cover as claimed in any one of claims 1 to 25.

27. A vehicle steering-wheel as claimed in claim 26, wherein said cover is a cover (1) for an airbag device.

## Patentansprüche

1. Fahrzeug-Lenkrad-Abdeckung (1), welche einen Körper (2) und ein Lagerelement (3) umfasst, welches ein vorherbestimmtes Profil hat, wobei das Lagerelement (3) mit dem Körper (2) in Verbindung steht, **dadurch gekennzeichnet, dass** eine Streueinrichtung (5) zum Streuen eines Lichts, welches von zumindest einer Lichtquelle (4) emittiert wird, sowie eine elektronische Steuereinrichtung (6) zum Steuern der Lichtquelle (4), um einen optischen Effekt als Antwort auf Daten (D), welche den Zustand des Fahrzeugs (8) betreffen, zwischen dem Körper (2) und dem Lagerelement (3) angeordnet sind.

2. Fahrzeug-Lenkrad-Abdeckung nach Anspruch 1, wobei die elektronische Steuereinrichtung (6) eine Datenerwerbs-Schnittstelle (6A), einen Mikroprozessor (6B) und eine Steuereinrichtung (6C) umfasst, wobei die Datenerwerbs-Schnittstelle (6A) eingerichtet ist, die Daten (D), welche den Zustand des Fahrzeugs (8) betreffen, zu empfangen, wobei der Mikroprozessor (6B) eingerichtet ist, die Daten (D) zu verarbeiten, um ein Verarbeitungssignal (S₁) gemäß vorher festgelegten Steuerkriterien (C) zu erzeugen, und wobei die Steuereinrichtung (6C) eingerichtet ist, das verarbeitete Signal (S₁) zu empfangen, um ein Steuersignal (S₂) zu erzeugen, um die Lichtquelle (4) gemäß den Steuerkriterien (C) zu steuern.

3. Fahrzeug-Lenkrad-Abdeckung nach Anspruch 2, wobei das Steuersignal (S₂) ein elektrisches Signal ist, welches geeignet moduliert ist, um die Lichtquelle (4) zu steuern, um einen optischen Effekt als Antwort auf die Daten (D) zu erlangen, welche den Zustand des Fahrzeugs (8) betreffen.

4. Fahrzeug-Lenkrad-Abdeckung nach Anspruch 2 oder 3, wobei das Steuersignal (S₂) ein elektrisches Signal ist, welches moduliert ist, die Lichtquelle (4) von einem Ausschaltzustand in einen Einschaltzustand mit einer vorher festgelegten Geschwindigkeit abzublenden, um **dadurch** einen optischen Einblendeffekt zu liefern.

5. Fahrzeug-Lenkrad-Abdeckung nach Anspruch 2 oder 3, wobei das Steuersignal (S₂) ein elektrisches Signal ist, welches moduliert ist, die Lichtquelle (4) von einem Einsclialtzustand in einen Ausschaltezustand mit einer vorher festgelegten Geschwindigkeit abzublenden, um einen optischen Ausblendeffekt zu liefern.

6. Fahrzeug-Lenkrad-Abdeckung nach Anspruch 2 oder 3, wobei das Steuersignal (S₂) ein elektrisches Signal ist, welches moduliert ist, zu bewirken, dass die Lichtquelle (4) mit einer vorher festgelegten Frequenz blinkt, um dadurch einen optischen Blinkeffekt zu liefern.

7. Fahrzeug-Lenkrad-Abdeckung nach Anspruch 2 bis 6, wobei die Datenerwerbs-Schnittstelle (6A) eine digitale Datenerwerbs-Schnittstelle ist, welche mit dem Datenkanal des Fahrzeugs eine Schnittstelle bilden kann, um die Daten (D), welche den Zustand des Fahrzeugs (8) betreffen, zu erwerben.

8. Fahrzeug-Lenkrad-Abdeckung nach Anspruch 2 bis 6, wobei die Datenerwerbs-Schnittstelle (6A) eine analoge Datenerwerbs-Schnittstelle ist, welche unmittelbar den Wert von vorher festgelegten elektrischen Mengen bei spezifischen Punkten der elektrischen Schaltung des Fahrzeugs erwerben kann, wobei die elektrischen Mengen für die Daten (D), welche den Zustand des Fahrzeugs (8) betreffen, repräsentativ sind.

9. Fahrzeug-Lenkrad-Abdeckung nach Anspruch 2 bis 6, wobei die Datenerwerbs-Schnittstelle (6A) eine Datenerwerbs-Schnittstelle auf Funkbasis ist, um die Daten (D), welche den Zustand des Fahrzeugs (8) betreffen, aus der Ferne zu erwerben.

10. Fahrzeug-Lenkrad-Abdeckung nach Anspruch 1 bis 9, wobei die Daten (D), welche den Zustand des Fahrzeugs betreffen, augenblickliche Geschwindigkeit, Durchschnittsgeschwindigkeit, augenblicklichen Kraftstoffverbrauch, durchschnittlichen Kraftstoffverbrauch und/oder Warnen über einen nicht normalen Zustand betreffen.

11. Fahrzeug-Lenkrad-Abdeckung nach Anspruch 1 bis 10, wobei der Körper (2) eine Aufnahme (9) umfasst, mit einem Boden (9A), der angepasst ist, um das Lagerelement (3) und die Streueinrichtung (5) in einer paketierten Konfiguration aufzunehmen.

12. Fahrzeug-Lenkrad-Abdeckung nach Anspruch 11, wobei das Lagerelement (3) eine Vorderwand (3A) hat, mit einer Aufnahme (3B), mit der ein Kennzeichen (3C) fest verknüpft ist, und einer hinteren Wand (3D) mit einer Eingriffseinrichtung (10), um das Lagerelement (3) mit dem Körper (2) zu verbinden.

13. Fahrzeug-Lenkrad-Abdeckung nach Anspruch 12, wobei die Eingriffseinrichtung (10) eine Spindel (11) umfasst, die von der hinteren Wand (3D) des Lagerelements (3) ragt, und eine Platte (7), in welcher ein Loch (7A) gebildet ist.

14. Fahrzeug-Lenkrad-Abdeckung nach Anspruch 11 bis 13, wobei der Boden (9A) der Aufnahme (9) eine vordere Wand (9B) und eine hintere Wand (9C) hat, und eine erste Öffnung (12), welche sich von der vorderen Wand (9B) und der hinteren Wand (9C) erstreckt, wobei sich die Spindel (11) durch die erste Öffnung (12) des Körpers (2) und durch das Loch (7A) der Platte (7) erstreckt, wobei die Spindel (11) ein Endteil (11A) hat, welches über der Platte (7) befestigt ist, um das Entfernen des Lagerelements (3) zu vermeiden.

15. Fahrzeug-Lenkrad-Abdeckung nach Anspruch 11 bis 14, wobei in der Nähe der vorderen Wand (9B) des Bodens (9A) der Aufnahme (9) der Boden (9A) eine zweite Öffnung (13) hat, um die Lichtquelle (4) aufzunehmen, so dass das Licht, welches durch die zumindest eine Lichtquelle (4) emittiert wird und welches durch die Streueinrichtung (5) aufgefangen wird, aus der zweiten Öffnung (13) durch sie gelangt.

16. Fahrzeug-Lenkrad-Abdeckung nach Anspruch 11 bis 15, wobei der Körper (2) ein Gehäuse (14), in der die elektronische Steuereinrichtung (6) angeordnet ist, an der hinteren Wand (9C) des Bodens (9A) der Aufnahme (9) hat.

17. Fahrzeug-Lenkrad-Abdeckung nach Anspruch 1 bis 16, wobei die Streueinrichtung (50) sich über das Profil des Lagerelements (3) hinaus erstreckt.

18. Fahrzeug-Lenkrad-Abdeckung nach Anspruch 12, wobei die Eingriffseinrichtung (10) mehrere Börteleinrichtungen umfasst, welche aus der hinteren Wand (3D) des Lagerelements (3) ragen.

19. Fahrzeug-Lenkrad-Abdeckung nach Anspruch 18, wobei die mehreren Börteleinrichtungen sich durch die Streueinrichtung (5) erstrecken.

20. Fahrzeug-Lenkrad-Abdeckung nach einem der vorhergehenden Ansprüche, wobei, wenn das Profil des Lagerelements (3) im Wesentlichen kreisförmig ist, die Streueinrichtung (5) dann ebenfalls ein im Wesentlichen kreisförmiges Profil haben wird.

21. Fahrzeug-Lenkrad-Abdeckung nach Anspruch 12, wobei zumindest ein Teil des Lagerelements (3) und das entsprechende Teil des Kennzeichens (3C) mehrere Mikrolöcher (15) haben, um das Licht, welches von der Lichtquelle (4) emittiert wird, auch durch das Lagerelement (3) und das Kennzeichen (3C) zu übertragen.

22. Fahrzeug-Lenkrad-Abdeckung nach einem der vorhergehenden Ansprüche, wobei die Lichtquelle eine LED, oder eine Gruppe aus LEDs einer einfarbigen oder einer RGB-Art aufweist.

23. Fahrzeug-Lenkrad-Abdeckung nach einem der vorhergehenden Ansprüche, wobei das Lagerelement (3) aus einem Folienmaterial gebildet ist.

24. Fahrzeug-Lenkrad-Abdeckung nach einem der vorhergehenden Ansprüche, wobei die Streueinrichtung (5) ein monolithisches Element aufweist, welches aus einem Material hergestellt ist, welches aus der Gruppe ausgewählt wird, welche aus transparentem Polykarbonat und Opalin besteht, wobei das monolithische Element eine Dicke in einem Bereich von 0,3 bis 10 mm, vorzugsweise von 0,5 bis 1,5 mm hat.

25. Fahrzeug-Lenkrad-Abdeckung nach Anspruch 24, wobei ein Filmdiffuser bei dem monolithischen Element angewandt wird.

26. Fahrzeug-Lenkrad-Abdeckung, welche eine Abdeckung nach einem der Ansprüche 1 bis 25 umfasst.

27. Fahrzeug-Lenkrad, nach Anspruch 26, wobei die Abdeckung eine Abdeckung (1) für einen Airbag ist.

## Revendications

1. Couvre-volant de véhicule (1) comportant un corps (2) et un support (3) de profil prédéterminé, ledit support (3) étant associé audit corps (2), **caractérisé en ce que** des moyens de diffusion (5) pour diffuser une lumière émise à partir d'au moins une source lumineuse (4), ainsi que des moyens de commande électroniques (6) pour commander ladite source lumineuse (4) et obtenir un effet visuel en réponse à des données (D) relatives à l'état du véhicule (8) sont interposés entre ledit corps (2) et ledit support (3).

2. Un couvre-volant de véhicule selon la revendication 1, dans lequel les dits moyens de commande électronique (6) comporte une interface d'acquisition de données (6A) un microprocesseur (6B) et un dispositif de commande (6C), ladite interface d'acquisition de données (6A) étant prévue pour recevoir lesdites données (D) relatives à l'état du véhicule (8), ledit microprocesseur (6B) étant prévu pour traiter lesdites données (D) et générer un signal en réponse (S₁) en fonction de paramètres prédéterminés (C), ledit dispositif de commande (6C) étant prévu pour recevoir ledit signal en réponse (S₁) et générer un signal de commande (S₂) pour commander ladite source lumineuse (4) en fonction desdits paramètres (C).

3. Un couvre-volant de véhicule selon la revendication 2, dans lequel le dit signal de commande (S₂) est un signal électrique modulé de manière appropriée pour commander ladite source lumineuse (4) et obtenir un effet visuel en réponse aux données (D) relatives à l'état du véhicule (8).

4. Un couvre-volant de véhicule selon les revendications 2 ou 3, dans lequel ledit signal de commande (S₂) est un signal électrique modulé pour faire faiblir ladite source lumineuse (4) d'une position éteinte à une position allumée selon une vitesse prédéterminée, pour ainsi procurer un effet d'éclairement progressif.

5. Un couvre-volant de véhicule selon les revendications 2 ou 3, dans lequel ledit signal de commande (S₂) est un signal électrique modulé pour faiblir ladite source lumineuse (4) d'une position allumée à une position éteinte selon une vitesse prédéterminée pour ainsi procurer un effet d'extinction progressif.

6. Un couvre-volant de véhicule selon les revendications 2 ou 3, dans lequel ledit signal de contrôle (S₂) est un signal électrique modulé pour provoquer le clignotement de ladite source lumineuse (4) selon une fréquence prédéterminée et ainsi procurer un effet de clignotement.

7. Couvre-volant de véhicule selon les revendications 2 à 6, dans lequel ladite interface d'acquisition de données (6A) est une interface d'acquisition de données numérique qui peut interagir avec le canal de données du véhicule, pour acquérir lesdites données (D) relatives à l'état du véhicule (8).

8. Un couvre-volant de véhicule selon les revendications de 2 à 6, dans lequel ladite interface d'acquisition de données (6A) est une interface d'acquisition de données analogique qui peut acquérir directement la valeur d'intensités électriques prédéterminées en des points spécifiques du circuit électrique du véhicule, lesdites intensités électriques étant représentatives desdites données (D) relatives à l'état du véhicule (8).

9. Un couvre-volant de véhicule tel que revendiqué dans les revendications 1 à 6, dans lequel ladite interface d'acquisition de données (6A) est une interface d'acquisition de données radio-commandée pour acquérir à distance lesdites données (D) concernant l'état du véhicule (8).

10. Un couvre-volant de véhicule selon les revendications 1 à 9, dans lequel lesdites données (D) relatives à l'état du véhicule comportent la vitesse instantanée, la vitesse moyenne, la consommation instantanée de carburant, la consommation moyenne de carburant et / ou des alertes d'états anormaux.

11. Un couvre-volant de véhicule selon les revendications 1 à 10, dans lequel ledit corps (2) comporte un réceptacle (9) avec un fond (9A) qui est formé pour recevoir ledit support (3) et lesdits moyens de diffusion (5) sous forme préemballée.

12. Un couvre-volant de véhicule selon la revendication 11, dans lequel ledit couvre-volant est fixé et une paroi arrière (3D), avec des moyens d'engagement (10) pour relier ledit support (3) audit corps (2).

13. Un couvre-volant de véhicule selon la revendication 12, dans lequel lesdits moyens d'engagement (10) comportent une tige (11) se projetant à partir de ladite paroi arrière (3D) du support (3) et une plaque (7) dans laquelle un orifice (7A) est ménagé.

14. Un couvre-volant de véhicule selon les revendications 11 à 13, dans lequel ledit fond (9A) du réceptacle (9) comporte une paroi avant (9B) et une paroi arrière (9C) et une première ouverture (12) s'étendant à partir de ladite paroi avant (9B) et ladite paroi arrière (9C), ladite tige (11) s'étendant à travers ladite première ouverture (12) dudit corps (2) et à travers ledit orifice (7A) de ladite plaque (7), ladite tige (11) comportant une partie d'extrémité (11A) qui est rivetée sur ladite plaque (7) pour prévenir le retrait du support (3).

15. Un couvre-volant de véhicule selon les revendications 11 à 14, dans lequel ledit fond (9A) présente, à proximité de ladite paroi avant (9B) du fond (9A) du réceptacle (9), une deuxième ouverture (13) pour recevoir la source lumineuse (4) de telle sorte que lumière émise par celle-ci et au moins une source lumineuse (4) soient interceptées par les moyens de diffusion (5) pour traverser ladite seconde ouverture (13).

16. Un couvre-volant de véhicule selon les revendications 11 à 15, dans lequel le corps (2) comporte un logement (14) dans lequel les moyens de contrôle (6) sont logés, sur la paroi arrière (9C) du fond (9A) du réceptacle (9).

17. Un couvre-volant de véhicule selon les revendications 1 à 16, dans lequel les moyens de diffusion (5) s'étendent au delà du profil du support (3).

18. Un couvre-volant de véhicule selon la revendication 12, dans lequel les moyens d'engagement (10) comportent une série de moyens d'agrippage projetés à partir de la paroi arrière (3D) du support (3).

19. Un couvre-volant de véhicule selon la revendication 18, dans lequel les moyens d'agrippage s'étendent à travers les moyens de diffusion (5).

20. Un couvre-volant de véhicule selon l'une quelconque des revendications précédentes, dans lequel, si ledit profil du support (3) est sensiblement circulaire, alors les moyens de diffusion (5) présenteront également un profil sensiblement circulaire.

21. Un couvre-volant de véhicule selon la revendication 12, dans lequel au moins au partie du support (3) et de la partie correspondante de l'emblème (3C) présente une série de micro-orifices (15) pour transmettre la lumière qui est émise par la source lumineuse (4) également au travers du support (3) et de l'emblème (3C).

22. Un couvre-volant de véhicule selon l'une quelconque des revendications précédentes, dans lequel la source lumineuse comporte une LED ou un groupe de LEDs, monocolores et/ou de type RGB.

23. Un couvre-volant de véhicule selon l'une quelconque des revendications précédentes, dans lequel ledit support (3) est réalisé en métal plaqué.

24. Un couvre-volant de véhicule selon l'une quelconque des revendications précédentes, dans lequel les moyens de diffusion (5) comportent un élément monobloc qui est réalisé dans un matériau choisi à l'intérieur d'un groupe composé de polycarbonate transparent et opaline, ledit élément monobloc comportant une épaisseur comprise entre 0,3 et 10 mm, et de préférence en 0,5 et 1,5 mm.

25. Un couvre-volant de véhicule selon la revendication 24, dans lequel un diffuseur de film est appliqué sur l'élément monobloc.

26. Un volant de véhicule comportant un couvre-volant tel que défini dans l'une quelconque des revendications 1 à 25.

27. Un volant de véhicule selon la revendication 26, dans lequel ledit couvre-volant est un couvre-volant (1) pour un dispositif airbag.
